(19) Europäisches Patentamt
European Patent Office
Office européen des brevets

(11) **EP 2 208 132 B1**

(12) **EUROPEAN PATENT SPECIFICATION**

(45) Date of publication and mention
of the grant of the patent:
**04.04.2012 Bulletin 2012/14**

(21) Application number: **08788515.8**

(22) Date of filing: **02.09.2008**

(51) Int Cl.:
**G06F 9/302** (2006.01)

(86) International application number:
**PCT/GB2008/002974**

(87) International publication number:
**WO 2009/056783 (07.05.2009 Gazette 2009/19)**

(54) **APPARATUS AND METHOD FOR PERFORMING MAGNITUDE DETECTION FOR ARITHMETIC OPERATIONS**

VORRICHTUNG UND VERFAHREN ZUR DURCHFÜHRUNG EINER BETRAGSDETEKTION FÜR ARITHMETISCHE OPERATIONEN

APPAREIL ET PROCEDE PERMETTANT D'EFFECTUER UNE DETECTION D'AMPLITUDE POUR DES OPERATIONS ARITHMETIQUES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.10.2007 GB 0721323**

(43) Date of publication of application:
**21.07.2010 Bulletin 2010/29**

(73) Proprietor: **ARM Limited**
**Cherry Hinton**
**Cambridge CB1 9NJ (GB)**

(72) Inventors:
• **KERSHAW, Daniel**
**Cambridge CB5 8HP (GB)**
• **WILDER, Mladen**
**Cambridge CB1 9EU (GB)**
• **SYMES, Dominic, Hugo**
**Cambridge CB1 7TT (GB)**

(74) Representative: **Keston, Susan Elizabeth**
**D Young & Co LLP**
**120 Holborn**
**London EC1N 2DY (GB)**

(56) References cited:
**US-A- 4 872 132      US-A1- 2003 005 015**
**US-A1- 2005 071 403**

• **TAYLOR D M ET AL: "A NOVEL VLSI DIGITAL SIGNAL PROCESSOR ARCHITECTURE FOR HIGH-SPEED VECTOR AND TRANSFORM OPERATIONS" INTERNATIONAL CONFERENCE ON ACOUSTICS, SPEECH & SIGNAL PROCESSING. ICASSP. DALLAS, APRIL 6 - 9, 1987; [INTERNATIONAL CONFERENCE ON ACOUSTICS, SPEECH & SIGNAL PROCESSING. ICASSP], NEW YORK, IEEE, US, vol. 1, 1 April 1987 (1987-04-01), pages 531-534, XP000758124**
• **KING G A AND PICTON P D: "Applying the vector signal processor" IEE COLLOQUIUM ON PRACTICAL APPLICATIONS OF DSP DEVICES, 11 June 1990 (1990-06-11), pages 9/1-9/4, XP006524148 London, UK**

## Description

The present invention relates to an apparatus and method for performing magnitude detection for arithmetic operations.

In many data processing applications there is a requirement to perform arithmetic operations and to perform scaling of the arithmetic result. One technique for performing scaling is a block floating point technique. In block floating-point arithmetic a block of data elements is assigned a single exponent rather than each data element having its own exponent. Accordingly, the exponent is typically determined by the data element in the block having the largest magnitude. The block floating point technique reduces the number of bits required to maintain precision in a series of calculations relative to standard floating-point arithmetic. Block floating point calculations are typically performed in software and require scaling of the complete data set following each stage of calculations that may involve a change in magnitude of the data values. The extra instructions required to maintain the data scaling to prevent overflow diminish processing performance in terms of both processing cycles and power consumption.

Accordingly, there is a requirement to improve the efficiency of calculations, such as block floating point calculations, which require both data scaling and arithmetic operations to be performed on data.

US 4,872,132 describes a method and means for block floating point arithmetic.

US 2005/0071403 A1 describes a method, system and computer program product for executing SIMD instruction for flexible FFT butterfly.

According to a first aspect, the present invention provides an apparatus (500) for processing data, said apparatus comprising:

processing circuitry (520) for performing data processing operations;
one or more registers (530, 540) for storing data;
control circuitry (510) for controlling said processing circuitry (520) to perform said data processing operations;
wherein said control circuitry (510) is configured such that it is responsive to a combined magnitude-detecting arithmetic instruction to control said processing circuitry (520) to perform an arithmetic operation on at least one data element stored in said one or more registers and specified by said combined magnitude-detecting arithmetic instruction and to perform a magnitude-detecting operation, wherein said magnitude-detecting operation calculates a magnitude-indicating result providing an indication of a position of a most-significant bit of a magnitude of a result of said arithmetic operation irrespective of whether said most-significant bit position exceeds a data element width of said at least one data element; characterised in that:

said processing circuitry (520) is SIMD processing circuitry arranged to independently perform said arithmetic operation for each of a plurality of SIMD lanes, said combined magnitude-detecting arithmetic instruction identifying at least one SIMD input vector comprising a plurality of data elements on which said arithmetic operation is independently performed to generate a SIMD result vector comprising a respective plurality of result data-elements; and
said magnitude-indicating result provides an indication of a most-significant bit of a greatest of a plurality of magnitudes corresponding to a respective plurality of data elements of said SIMD result vector.

The present invention recognises that by providing a single instruction that both performs an arithmetic operation on at least one data element and performs a magnitude-detecting operation to provide an indication of a most-significant bit position of the arithmetic operation irrespective of whether the most-significant bit-position exceeds a data element width of the data element, the program code density for algorithms that perform both arithmetic manipulations and data scaling can be reduced. Providing a special-purpose instruction that both calculates an arithmetic result and facilitates calculation of the position of the most-significant bit of the arithmetic result means that common data manipulations can be performed more efficiently than in known systems which provide separate magnitude-detecting and arithmetic operations. The improved efficiency is achieved a result of fewer instructions being executed, higher throughput and reduced power consumption for the same functionality relative to previously known systems.

The combined magnitude-detecting arithmetic instruction according to the present technique can be implemented in a data processing apparatus comprising only scalar processing circuitry. In one embodiment, the processing circuitry is SIMD processing circuitry arranged to independently perform the arithmetic operation for each of a plurality of SIMD lanes, the combined magnitude-detecting arithmetic instruction identifying at least one SIMD input vector comprising a plurality of data elements on which the arithmetic operation is independently performed to generate a SIMD result vector comprising a respective plurality of result data-elements. This offers improved efficiency since it enables a plurality of magnitude-indicating results corresponding to a respective plurality of result data-elements of a SIMD result vector to be calculated substantially simultaneously.

Although the magnitude-indicating result could indicate the most significant bit for any one of the plurality of data elements within a SIMD result vector, in one embodiment, the magnitude-indicating result provides an indication of a most-significant bit of a greatest of a plurality of magnitudes corresponding to a respective plurality of data elements of the SIMD result vector. This efficiently provides information that allows for scaling of a data set.

The magnitude-indicating result can be provided in a variety of different forms, but in one embodiment, the magnitude-indicating result comprises a SIMD result vector having a plurality of magnitude-indicating result values corresponding respectively to the plurality of SIMD lanes.

The one or more registers of the data processing apparatus which is responsive to the combined magnitude-detecting arithmetic instruction could comprise a single register bank. However, in one embodiment, the one or more registers comprises a SIMD register bank and a scalar register bank. This allows for efficient implementation of the instruction in a SIMD system since the magnitude-indicating result can be stored in the scalar registers.

In one embodiment, the control circuitry controls the processing circuitry to store the result of the SIMD arithmetic operation in the SIMD register bank.

It will be appreciated that the magnitude-indicating result could be stored in any form of memory or in a special-purpose register. However, in one embodiment, the control circuitry controls the processing circuitry to store the magnitude-indicating result in a general purpose register. In one embodiment, the general purpose register is a SIMD register and in another embodiment the general purpose register is a scalar register. In yet a further alternative embodiment, the magnitude-indicating result is stored in a dedicated register.

The arithmetic operation could be any variant of arithmetic operation but in one embodiment, the arithmetic operation is an unsigned arithmetic operation and in another embodiment the arithmetic operation is a signed arithmetic operation.

It will be appreciated that the scaling calculation can be performed whilst the arithmetic operation is being performed. However, in one embodiment, the control circuitry is responsive to the combined magnitude-detecting arithmetic instruction to perform a scaling calculation to scale the at least one data element prior to performing the arithmetic operation in dependence upon a scaling parameter specified by the combined magnitude-detecting arithmetic instruction. This differs from known floating point arithmetic where the scaling operation is typically performed after the arithmetic operation has been performed.

It will be appreciated that the magnitude-indicating result could be calculated based on the unscaled result of the arithmetic operation and then some other scheme could be used to correct the result according to the known effect that the scaling would have. In one embodiment, the control circuitry is responsive to the combined magnitude-detecting arithmetic instruction to calculate the magnitude-indicating result from output of the scaling calculation.

Although the combined magnitude-detecting arithmetic instruction could be any type of instruction, in one embodiment, the combined magnitude-detecting arithmetic instruction is a block floating-point instruction. Providing the combined instruction alleviates a key performance problem (both processing cycles and power) with known block floating point techniques, which require additional instructions to maintain the data scaling.

It will be appreciated that the arithmetic operation could be any one of a number of different arithmetic operations, but in certain embodiments, the arithmetic operation is at least one of a move add, subtract, multiply and multiply-accumulate operation.

It will be appreciated that calculation of the magnitude-indicating result can be performed in any one of a number of ways. In one embodiment, the control circuitry is responsive to the combined magnitude-detecting arithmetic instruction to control the processing circuitry to perform at least one logical operation on at least two of the plurality of data elements of the result of the SIMD arithmetic operation to calculate the magnitude-indicating result, wherein the at least one logical operation is functionally equivalent to a logical OR operation. Calculation of the magnitude-indicating result using at least one logical operation which is functionally equivalent to a logical OR operation is straightforward and inexpensive to implement and involves only a small increase in the complexity of the ALU to achieve the improved efficiency.

Although the at least one logical operation could be performed on complete data elements of the arithmetic result or result vector, in one embodiment, the control circuitry is responsive to the combined magnitude-detecting arithmetic instruction to control the processing circuitry to perform the at least one logical operation on a subset of bits of the at least two data elements. This enables the most-significant bit position to be determined more efficiently by processing a smaller volume of data. In one such embodiment, the subset of bits corresponds to one or more most-significant bits of respective ones of the at least two data elements.

In one embodiment, the control circuitry is responsive to the combined magnitude-detecting arithmetic instruction to control the processing circuitry to detect one or more of the plurality of data elements of the result of the SIMD arithmetic operation having a negative value and to invert the negative value prior to performing the at least one logical operation.

In another embodiment, instead of inverting the negative value, the control circuitry is responsive to the combined magnitude-detecting arithmetic instruction to control the processing circuitry to detect one or more of the plurality of data elements of the result of the SIMD arithmetic operation having a negative value and to negate the negative values prior to performing the at least one logical operation. This enables accurate results for the most-significant bit position to be determined for scaling purposes even for signed data values. Negation and inversion of data values in this way is straightforward to implement.

In one embodiment, the control circuitry is responsive to the combined magnitude-detecting arithmetic instruction to control the processing circuitry to calculate the magnitude-indicating result in dependence upon an operand specified by the combined magnitude-detecting arithmetic instruction. In one such embodiment, the at least one logical operation is dependent upon the operand. This provides additional flexibility in performing the magnitude-detecting operation since, for example the operand can specify a common source and destination within the one or more registers for the at least one logical operation. This also provides a more efficient way of combining the most significant bit position calculations for a large loop by allowing the problem to be broken down into subsets of magnitude calculations for respective groups of result data values.

It will be appreciated that the magnitude-indicating result could be post-processed in any one of a number of different ways to derive the position of the most-significant non-zero bit. However, in one embodiment, the processing circuitry calculates the magnitude-indicating result such that the most-significant non-zero bit is derivable from the magnitude-indicating result by executing one of a Count Leading Zeros instruction and a Count Leading Sign instruction. The use of these pre-existing instructions makes the present technique easy to implement.

It will be appreciated that the magnitude-indicating result could be stored in any one of a number of different ways. However, in one embodiment, the control circuitry controls the processing circuitry to store the magnitude-indicating result in a magnitude-indicating register of the one or more registers.

In one such embodiment, the magnitude-indicating register is specified by a parameter of the combined magnitude-detecting arithmetic instruction. this is convenient to implement and allows for flexibility in specifying an appropriate register.

In one embodiment, the magnitude-indicating register is a general-purpose register. In some such embodiments the general purpose register is one of a SIMD register and a scalar register.

Although the combined magnitude-detecting arithmetic instruction could be included anywhere in program code where an indication of the magnitude of an arithmetic result is required, in one embodiment, the combined magnitude-detecting arithmetic instruction is provided within a loop of instructions such that the magnitude-indicating result is calculated for each iteration of the loop. The efficiency of providing a single instruction to perform an arithmetic instruction and in addition provide an indication of a most-significant bit-position of an arithmetic result is apparent particularly where such operations are likely to be repetitively performed in loops of program code.

In one embodiment, the control circuitry is responsive to the combined magnitude-detecting arithmetic instruction to accumulate the magnitude-indicating result for each iteration of the loop in the magnitude-indicating register. This provides the flexibility to break down a calculation of a most-significant bit-position for a plurality of result values into more manageable sub-calculations.

According to a second aspect, the present invention provides a method for processing data with a data processing apparatus having processing circuitry for performing data processing operations, one or more registers for storing data and control circuitry for controlling said processing circuitry to perform said data processing operations, said method comprising in response to a combined magnitude-detecting arithmetic instruction:

controlling (360;450) said processing circuitry to perform an arithmetic operation on at least one data element stored in said one or more registers and specified by said combined magnitude-detecting arithmetic instruction; and performing (360;450) a magnitude-detecting operation, wherein said magnitude-detecting operation calculates a magnitude-indicating result providing an indication of a position of a most-significant bit of a magnitude of a result of said arithmetic operation irrespective of whether said most-significant bit position exceeds a data element width of said at least one data element; characterised in that:

said arithmetic operation is performed for each of a plurality SIMD lanes, said combined magnitude-detecting arithmetic instruction identifying at least one SIMD input vector comprising a plurality of data elements on which said arithmetic operation is independently performed to generate a SIMD result vector comprising a respective plurality of result data elements; and said magnitude indicating result provides an indication of a most significant bit of a greatest of a plurality of magnitudes corresponding to a respective plurality of data elements of said SIMD result vector.

According to a third aspect the present invention provides a virtual machine (800) providing an emulation of an apparatus (500) for processing data, said apparatus comprising:

processing circuitry (520) for performing data processing operations;
one or more registers (530,540) for storing data;
control circuitry (510) for controlling said processing circuitry (520) to perform said data processing operations;

wherein said control circuitry (510) is configured such that it is responsive to a combined magnitude-detecting arithmetic instruction to control said processing circuitry (520) to perform an arithmetic operation on at least one data element stored in said one or more registers and specified by said combined magnitude-detecting arithmetic instruction and to perform a magnitude-detecting operation, wherein said magnitude-detecting operation calculates a magnitude-indicating result providing an indication of a position of a most-significant bit of a magnitude of a result of said arithmetic operation irrespective of whether said most-significant bit position exceeds a data element width of said at least one data element; characterised in that:

said processing circuitry (520) is SIMD processing circuitry arranged to independently perform said arithmetic operation for each of a plurality of SIMD lanes, said combined magnitude-detecting arithmetic instruction identifying at least one SIMD input vector comprising a plurality of data elements on which said arithmetic operation is independently performed to generate a SIMD result vector comprising a respective plurality of result data-elements; and

said magnitude-indicating result provides an indication of a most-significant bit of a greatest of a plurality of magnitudes corresponding to a respective plurality of data elements of said SIMD result vector.

Embodiments of the present invention will now be described, by way of example only, with reference to the accompanying drawings in which:

Figure 1 schematically illustrates a *"butterfly diagram"* that illustrates data manipulations performed during computation of the Fast Fourier Transform;
Figure 2 is a flow chart that schematically illustrates how a known block floating point algorithm performs a Fast Fourier Transform calculation;
Figure 3 is a flow chart that schematically illustrates a block floating point algorithm according to an embodiment of the present invention;
Figure 4 is a flow chart that schematically illustrates a block floating point algorithm according to alternative embodiment of the present invention;
Figure 5 schematically illustrates a data engine for implementing the combined magnitude-detecting arithmetic instruction according to the present technique;
Figure 6 schematically illustrates the maximum mask circuitry of Figure 5 in more detail;
Figures 7A and 7B schematically illustrate two different sets of circuitry and associated data flow for execution of a combined magnitude-detecting arithmetic instruction according to the present technique; and
Figure 8 schematically illustrates a virtual machine implementation of the data engine of Figure 5.

The Fourier Transform is a mathematical operation that that decomposes a function into a continuous spectrum of its frequency components.
A discrete Fourier transform is a Fourier transform corresponding to discrete time signals and is widely employed in signal processing applications to analyse frequencies contained in a sample signal, to solve partial differential equations and to perform other operations such as convolutions. The Fast Fourier Transform (FFT) algorithm is used to compute a discrete Fourier transform.
The discrete Fourier Transform can be described by the following equation:

$$X(k) = \sum_{n=0}^{N-1} x(n)\, W^{kn}_{N} \quad 0 \leq k \leq N\text{-}1$$

The transform computation involves calculating the sequence X(k) of complex numbers given N input data values corresponding to the sequence x(n) (usually also assumed to be complex valued) and where $W_N = e^{-j2\pi/N}$ (twiddle factors).

$$X(k) = \sum_{n=0}^{(N/2)-1} \left[ x(n) + (-1)^{k} x\left( n + \frac{N}{2} \right) \right] W^{kn}_{N}$$

Splitting X(k) into even-numbered and odd-numbered samples (process called decimation) gives

$$X(2k) = \sum_{n=0}^{(N/2)-1}\left[ x(n) + x\left(n + \frac{N}{2}\right)\right] W_N^{2kn}, \ k = 0,1,2...,\frac{N}{2}-1$$

$$\text{even samples}$$

$$X(2k+1) = \sum_{n=0}^{(N/2)-1}\left[ x(n) - x\left(n + \frac{N}{2}\right)\right] W_N^{2kn}W_N^{n}, \ k = 0,1,2...,\frac{N}{2}-1 \ \text{ odd samples}$$

These equations form the decimation-in frequency FFT algorithm for calculating the discrete Fourier transform. Computation of this N-point DFT via the decimation-in-frequency FFT requires $N \log_2 N$ complex additions and $(N/2) \log_2 N$ complex multiplications.

To directly evaluate the sums involved in the discrete Fourier transform equations would take the order to $N^2$ mathematical operations for a total of N data samples, but the FFT algorithm allows the same result to be computed in only the order of N Log N operations. This simplification is achieved by recursively breaking down a discrete Fourier transform of any composite size $N = N_1.N_2$ into a plurality of smaller DFTs of sizes $N_1$ and $N_2$ and the order of N multiplications by complex roots of unity known as *"twiddle factors"*. The radix-2 FFT algorithm divides the discrete Fourier transform into two pieces of size N/2 at each step.

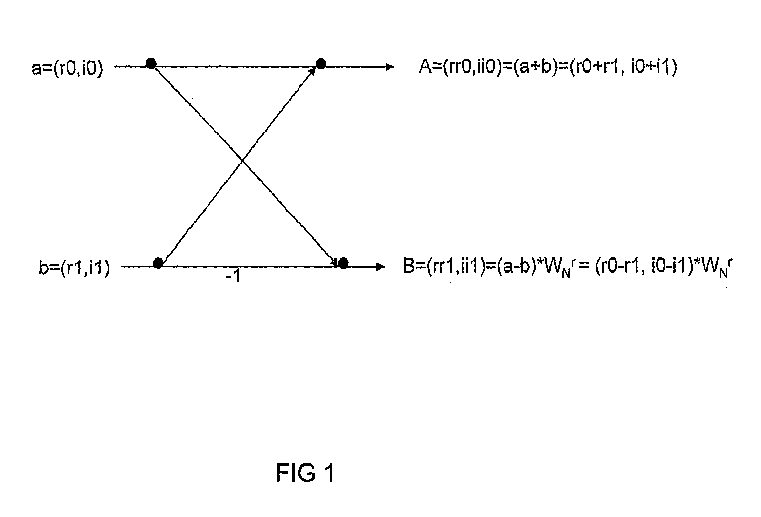

Figure 1 schematically illustrates a *"butterfly diagram"* that illustrates data manipulations performed during computation of the Fast Fourier Transform.

The basic computation represented by the butterfly diagram of Figure 1 is iterated many times during an FFT computation. The butterfly diagram shows two complex input values a and b. The input value a has a real component r0 and an imaginary component i0 whilst the input value b has a real component r1 and an imaginary component i1. The points of the right hand side of the diagram correspond to the outputs of one round of an FFT computation. In particular, the output value A represents a complex sum of the input value a and the input value b. The real part of the output value A is given by the sum of the real components of the input values a and b respectively i.e. r0 + r1 whilst the imaginary part is given by the sum of the imaginary parts of a and b i.e. i0 + i1. The output value B is also calculated in dependence upon the input values a and b, but this time corresponds to a complex subtraction operation a - b and a multiplication by complex factors known as a *"twiddle factor"* W. Thus the output value B is given by (a - b)*W and involves a single complex multiplication. The lines with arrows on the butterfly diagram represent dataflow and thus give an indication of the dependencies between the output data values A and B and the input data values a and b. The outputs A and B correspond to outputs of two sub-transforms

The FFT computation involves a plurality of loops of calculation each loop of which involves calculation of a plurality of butterfly diagrams. Thus the output values A and B in Figure 1 will be supplied as input values to a subsequent round of butterfly calculations. However, between subsequent rounds of butterfly calculations (inner loops of calculations) the result vectors from previously rounds of calculation will typically be rearranged e.g. by performing deinterleave (also denoted herein as "unzip" operations) on the vectors prior to performing the next round of butterfly calculations.

It can be seen from the data flow of the Figure 1, that each iteration of an inner loop, which involves computation of butterfly diagrams, may cause the bit-width of the data elements to grow. This can be seen by considering the input data elements a and b and noting that the output value A involves an addition operation for each of the real part and the imaginary part of the complex number. Accordingly, the output value A can grow by one bit due to carry-bits from the addition operation. Similarly the output value B involves a complex multiplication between the complex value $c = a - b = c_r + ic_i$ and a complex twiddle factor $W = w_r + iw_i$, where $c_r$, $w_r$ are the real components and $c_i$, $w_i$ are the imaginary components of c and W. Since the complex multiplication $c^{*'}T = (c_r.w_r + ic_i.w_r + iw_i.c_r - c_i.w_i)$ involves two addition operations this can result in an output value that has grown by two bits relative to the bit-width of the input data element b.

Thus the addition and multiplication operations cause the data bit width to grow proportionally to the number of iterations of the algorithm in which the butterfly operations are calculated. In general the number of iterations depends on the logarithm (base 2) of the number of input data points. Thus it will be appreciated that an FFT computation typically increases the dynamic range in proportion to the number of elements being processed. Similar considerations apply to other different signal processing algorithms such as the Viterbi algorithm and Turbo decoding algorithms and the present technique is applicable to a range of different algorithms, the FFT algorithm being only one illustrative example.

To cope with the large dynamic range of such computations, a block floating-point arithmetic computation can be performed. In block floating-point arithmetic a block of data is assigned a single exponent rather than each data element having its own exponent. Accordingly, the exponent is typically determined by the data element in the block having the largest magnitude. The use of block floating-point arithmetic obviates the need for complex floating-point multipliers and floating-point adders. Instead, a complex value integer pair is represented with a single scale factor that is typically shared amongst other complex value integer pairs of the block of data. After each stage of the FFT, the largest magnitude output value is detected and the result of the given iteration is scaled to improve the precision of the calculation. The exponent records the number of left or right shifts used to perform the scaling. The conversion from fixed-point to block floating-point representation is typically performed explicitly by the programmer in software.

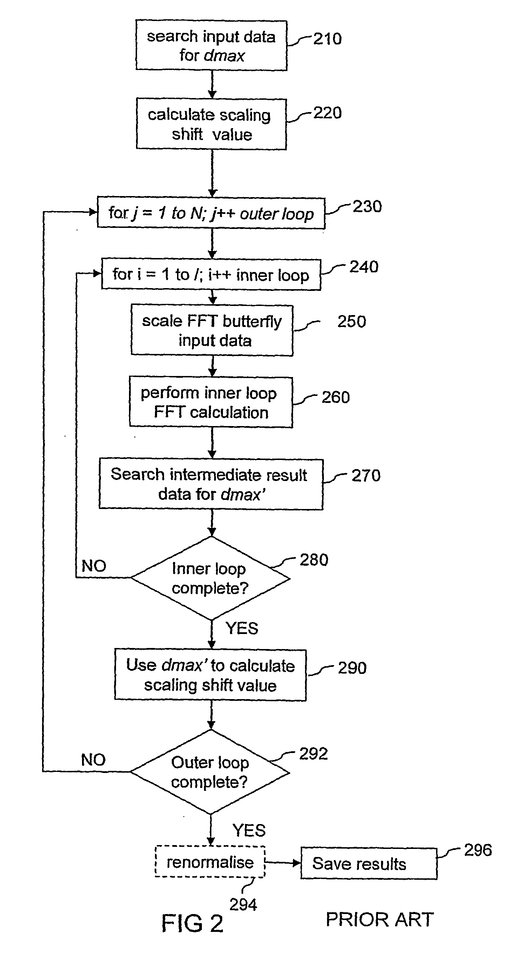

Figure 2 is a flow chart that schematically illustrates how a known block floating point algorithm performs a calculation. In this particular example the calculation is a Fast Fourier Transform calculation, but it will be appreciated that other different types of calculation could be performed in a similar manner.

The process begins at stage 210 where a block of input data is searched for the value "*dmax*" corresponding to an input data element having the largest magnitude. Next, at stage 220 a scaling shift value is determined in dependence upon the value of *dmax*. The process then proceeds to stage 230 the value of j, which is an index for an FFT outer loop, is initialised for j=1 to a value of unity and subsequently incremented on successive loops.

Next, at stage 240, an FFT inner loop index, i, is initialised on the first iteration and subsequently incremented. This inner loop corresponds to performing one complete round of butterfly computations on all of the input data elements. The first stage of the inner loop calculation is stage 250, which involves scaling all of the input data elements by the predetermined scaling shift value. Note that the scaling shift value is determined at stage 220 for the first iteration, but is subsequently determined at stage 290, i.e., at the end of each FFT inner loop. Following the scaling of the input data at stage 250, each data element shares the same exponent value and the same data-element width. Stage 260 corresponds to the body of the FFT inner loop calculation which involves computation of a plurality of butterfly diagrams such as the one illustrated in Figure 1. Once the FFT butterflies have been calculated, the process proceeds to stage 270 where the intermediate result data (corresponding to outputs A and B in Figure 1) is searched for a new maximum magnitude "*dmax*". Recall that, due to the arithmetic operations involved, each round of the butterfly computations potentially involves an increase in the bit-width of the result data values relative to the input data values. Accordingly, the value of *dmax* is likely to change from one iteration to the next. Note that *dmax* is updated for each iteration of the inner loop to generated the updated maximum value *dmax'*.

Once the value of *dmax* has been updated at stage 270, the process proceeds to stage 280, where it is determined whether or not the FFT inner loop is complete. If the inner loop is not complete then the process returns to stage 240 where the index i is incremented and the next iteration of the FFT inner loop is performed. If, on the other hand, it is determined at stage 280 that the inner loop is in fact complete then the process proceeds to stage 290 where the current value of *dmax'* is used to calculate a new scaling shift value for use in a subsequent FFT outer loop. This scaling shift value is applied at stage 250 to all of the input data prior to performing the next round of FFT inner loop calculations.

After the scaling shift value has been calculated at stage 290, the process proceeds to stage 292, where it is determined whether or not the FFT outer loop is complete. If the outer loop is not complete then the process returns to stage 230 where the counter j is incremented and a data rearrangement is performed prior to the next round of butterfly calculations in the FFT inner loop. If, on the other hand, it is determined at stage 292 that the outer loop is in fact complete then the process proceeds to stage 294 where a data normalisation is performed to take account of the effects of the scaling of the data performed at each stage of the calculation. However, the normalisation stage 294 is optional. Finally, at stage 296, the results of the FFT calculation are saved in memory.

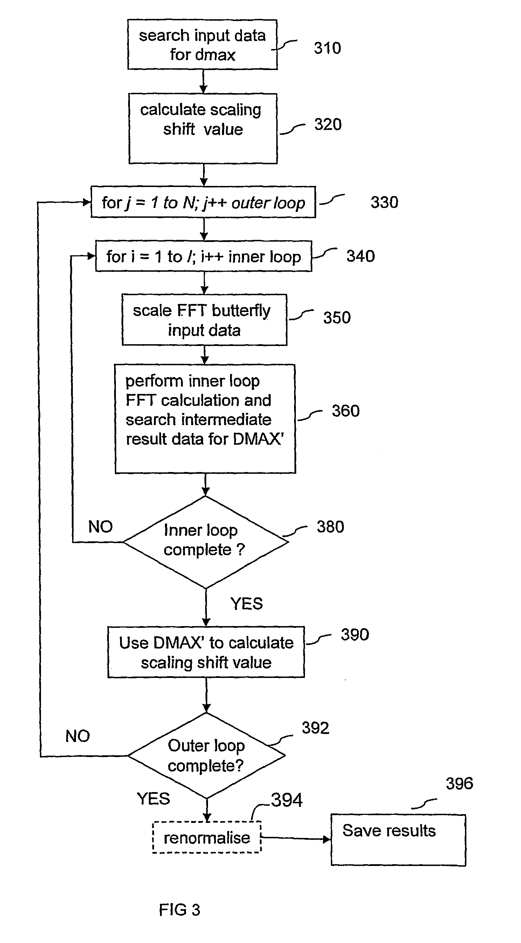

Figure 3 is a flow chart that schematically illustrates a block floating point algorithm according to an embodiment of the present invention.

Comparison of the flow chart of Figure 2, which relates to the known technique and the flow chart of Figure 3 reveals that stages 310, 320, 330, 340, 350, 380, 390, 392, 394 and 396 of Figure 3 directly parallel stages 210, 220, 230, 240, 250, 280, 290, 292, 294 and 296 respectively in the known technique of Figure 2. However, one key distinction between the embodiment of Figure 3 and the known technique of Figure 2 is that in Figure 3 the steps of (i) performing the inner loop FFT calculation and (ii) searching the intermediate result data for *dmax'* which are performed in distinct stages 260, 270 in Figure 2 are combined such that they are performed at a single stage 360 in Figure 3.

The combining of steps (i) and (ii) above is made possible by providing a single program instruction that both performs the required arithmetic operation(s) and provides magnitude information associated with the result of the arithmetic operation(s). In the case of the FFT calculations, the arithmetic operations are as shown in Figure 1 (i.e. complex addition, subtraction and multiplication operations). Combining the arithmetic calculation step with the *dmax'* determination as shown in step 360 of Figure 3 provides for more efficient implementation of the FFT algorithm *dmax'* is calculated as part of the FFT inner loop butterfly evaluation. In Figure 2, *dmax'* must be determined separately (using different program instructions) after the FFT butterflies have been calculated.

Calculation of the scaling shift value from *dmax'* at stage 390 of the flow chart of Figure 3 is performed using a CLS (Count Leading Sign) or CLZ (Count Leading Zeros) instruction. The CLZ instruction returns a number of binary bits before the first binary one in a register value. The CLS instruction returns the position of the non-sign extension bit relative to the most significant bit of the data type containing the CLS's operand.

For example:

$$MSB\_Position = CLS(dmax');$$

If, for example the container is 16-bit, and *dmax'* is 0001_0000_0000_0000 (in binary), corresponding to +4096 in decimal, CLS will return a value of 3. Considering signed integers, if for example *dmax'* is 1111_1000_0000_0000 (in binary), corresponding to -2048 decimal then, CLS will return a value of 5. The scaling shift value is calculated as follows:

$$Shift\_Value \quad = Target\_MSB - MSB\_Position;$$

where the target MSB position is where the MSB of the largest scaled datum should lie. The target MSB is chosen such that no overflow can occur. If the Shift is positive then the data is shifted left whereas if the shift is negative the data is shifted to the right.

The result of the calculation at stage 390 is applied at stage 350. Alternative embodiments use the result of the arithmetic operation (stage 360 in this particular example) and then use a different scheme to correct the result according to the known effect that the scaling will have on the result. Note that in alternative arrangements stage 350 and 360 can be swapped so that scaling is perfromed after the FFT inner loop calculation. If the calculation result is a negative value then the most significant bit is determined from an inverted form of the result such that the combined MSB result becomes OR_MSB = Current_OR_MSB | (Result <0 ?~Result : Result).

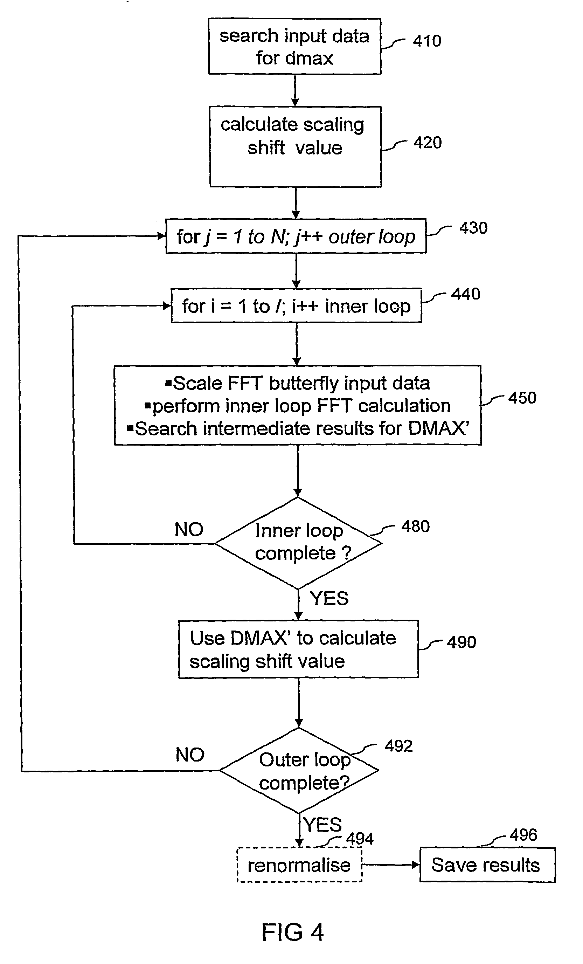

Figure 4 is a flow chart that schematically illustrates a block floating point algorithm according to alternative embodiment of the present invention.

As explained above, the embodiment of Figure 3 differs from the known technique of Figure 2 by combining stages 260 and 270 of Figure 2 into a single stage 360 in Figure 3. The embodiment of Figure 4 combines three separate stages of the Figure 2 process, i.e. stages 250, 260 and 270, into a single stage 450 so that a single program instruction is provided to: (i) scale all input data for a given iteration of the FFT inner loop; (ii) perform the FFT inner loop butterfly calculations; and (iii) search the intermediate results for *dmax'*.

The step 450 is adapted such that it takes into account possible overflows that may occur in the calculation prior to the scaling of the input data. Fusing operations 250, 260 and 270 of the known block floating point algorithm of Figure 2 in this way provides a performance advantage by reducing the number of processing cycles and reducing the power required to perform the FFT calculation by obviating the need for the extra instructions required to perform the scaling of input data for each round of the calculation (relative to Figure 2 and Figure 3) and by obviating the need for separate instructions to calculate *dmax'* following the arithmetic operations (relative to Figure 2).

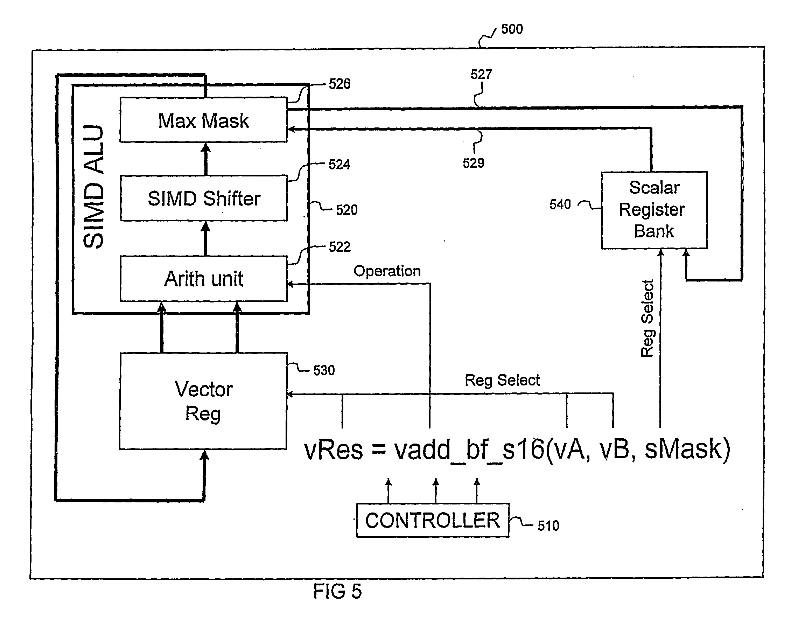

Figure 5 schematically illustrates a data engine for implementing the combined magnitude-detecting arithmetic instruction according to the present technique. The apparatus comprises a data engine 500 having: a controller 510; a SIMD ALU 520 comprising an arithmetic unit 522, a SIMD shifter 524 and a maximum-value mask 526; a SIMD vector register 530; and a scalar register bank 540.

In the embodiment of Figure 5, the combined magnitude-detecting arithmetic instruction is a SIMD instruction. SIMD processing involves performing the same operation, be it arithmetic or otherwise, on a plurality of data elements substantially simultaneously. The SIMD processing makes use of so-called "packed vectors", which are data structures that contain a plurality of basic data-elements. SIMD packed vectors can be used as arguments for SIMD instructions such as arithmetic operations, and the arithmetic operation specified by the SIMD instruction is independently performed on each of the plurality data-elements in the SIMD vector substantially simultaneously. The packed vectors corresponding to SIMD operands are stored in the vector register 530. The SIMD ALU 520 performs arithmetic operations on SIMD vectors and also performs magnitude detection.

One example of a combined magnitude-detecting arithmetic instruction according to the present technique is the "vRes" instruction (see al Figure 5):-

$$vRes = vadd\_bf\_s16\ (vA, vB, sMask),$$

This vRes instruction takes two SIMD vector input operands Va and Vb, each packed vector comprising thirty-two 16-bit data elements. A further input parameter "sMask" specifies a 16-bit scalar value corresponding to a scalar register within the scalar register bank 540. In this particular example, the arithmetic operation is an add operation "vadd". Thus thirty-two independent additions are performed corresponding to the thirty-two data elements of the packed vectors vA and vB.

Now consider how the vRes instruction, is implemented by the data engine of Figure 5. The controller 510 is responsive to the vRes instruction to send control signals to the SIMD processing circuitry 520 and scalar register bank 540 to perform data manipulations as specified by the instruction (in this addition operations and magnitude-detection operations).

The controller 510 is responsive to an instruction corresponding to the vadd "primitive" (or "intrinsic") shown in Figure 5 to load constituent data-elements corresponding to SIMD vectors vA and vB into the SIMD vector register 530 (if not already present). The SIMD vA, vB are read from the vector register 530 and supplied directly to the arithmetic unit 520 which performs the SIMD add operation. The results of the SIMD arithmetic operation is output by the arithmetic unit 522 and supplied to the SIMD shifter 524. The SIMD shifter 524 performs the scaling of the data by shifting each data sample in accordance with the appropriate scaling shift value. The scaling shift values are calculated at stage 320 (first iteration) or stage 390 in the flow chart of the Figure 3 embodiment. Alternatively, the scaling shift values are calculated at stage 420 (first iteration) or stage 490 in the flow chart of the Figure 4 embodiment. A right-shift corresponds to division by two. As explained above, following each FFT inner loop iteration there is likely to be at least one carry bit from the addition so it is likely that the SIMD shifter 524 will perform at least one right-shift of the data to implement the scaling.

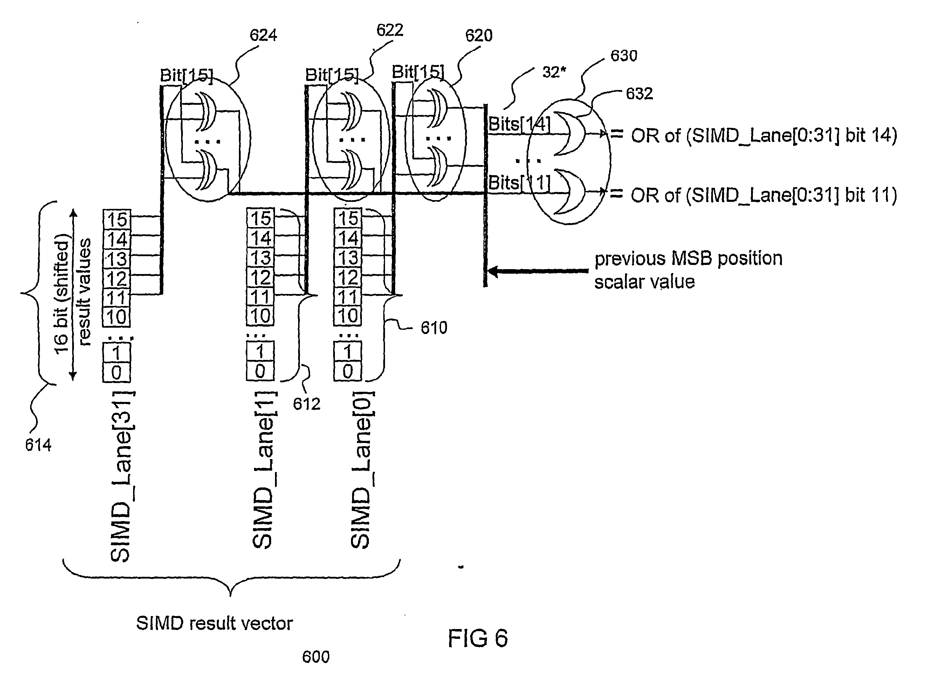

Scaled results output by the SIMD shifter 524 are supplied as input to the maximum mask circuitry 526 within the SIMD ALU 520 where an updated value of the MSB mask is calculated in dependence upon the scaled results. The maximum mask calculation is explained in detail bellow with reference to Figure 6. Although in the embodiment of Figure 5, the scaling is performed during execution of the vRes instruction, in alternative embodiments, the data scaling takes place as data is written to or read from memory in the vector register bank 530.

An updated value for the MSB mask for a current FFT inner loop is supplied via path 527 to the scalar register bank 540 for storage in a scalar register for use in the next iteration of the FFT inner loop. The input parameter sMask of the vRes instruction specifies a scalar register from which the maximum mask circuitry 526 reads a current value of the MSB mask at the beginning of an FFT inner loop iteration and the updated value of the MSB mask is written to the sMask register at the end of the iteration.

In an alternative embodiment to that of Figure 5, the vRes instruction according the present technique has a further input operand, the further input operand is a scalar value that specifies the shift to be applied to the result of the arithmetic operation. The scalar shift value is a signed value. A positive shift value indicates a right-shift and a negative signed value indicates the lefl-shift. The data scaling is performed during execution of the instruction. In this alternative embodiment the instruction has the following format:

<arithmetic op>_bf SIMD destination, SIMD operand_1, SIMD operand_2, scalar mag, scalar shift

where _bf qualifies the instruction as being of block floating point type; &lt;arithmetic op&gt; can be add, subtract etc; SIMD indicates that operand_1, operand_2 and destination are SIMD registers. The values "mag" and "shift" are both scalar values. The value "mag" specifies a common source and destination register for an ORing operation used to determine the most-significant-bit. The value "shift" is a signed value that specifies the shift to be applied to the result of the arithmetic operation. Note that in alternative embodiments the scalar shift field is omitted from the instruction and instead of combing the data scaling with the instruction, the data scaling is performed as data is written to or read from memory. The shift performed to implement the scaling of step 250 of Figure 2 can be associated with a load operation e.g. Reg = vload (address, scalar shift).

The arithmetic unit 522 of the SIMD ALU 520 comprises circuitry adapted to allow for extra carries generated prior to the scaling operation by the arithmetic operation of the vRes instruction.

The maximum mask circuitry 526 of the SIMD ALU 520 is operable to combine the most significant bit position returned by each of the plurality of program instructions of the inner loop of the FFT calculation. Thus a plurality of most significant bit values are combined and the scalar register sMask of the scalar register bank 540 maintains the value corresponding to the highest most significant bit position. Thus at the end of each inner FFT loop iteration the most significant bit overall for the given iteration is read from the scalar register and used for scaling data in the subsequent iteration.

In the embodiment of Figure 5, a most-significant-bit position is stored in the scalar register sMask of the scalar register bank 540. However, in an alternative embodiment, the register is one of the general purpose registers within the data processing apparatus. In such an alternative embodiment the combined magnitude-detecting arithmetic instruction specifies both a source register and a destination register within the general purpose register bank to perform the operation of maintaining the value of the highest most significant bit position for a round of calculations.

Figure 6 schematically illustrates the maximum mask circuitry 526 of Figure 5 in more detail. The maximum mask circuitry comprises a plurality of SIMD lanes 600, each SIMD lane comprising a 16-bit data element 610, 612, 614. In this particular embodiment, there are a total of thirty-two SIMD lanes. However, only three of these lanes 610, 612 and 614 are actually shown for clarity of illustration. The thirty-two 16-bit data elements 600 correspond to entries of the SIMD result vector, A set of XOR gates 624 is associated with SIMD lane 31 and data element 614; a set of XOR gates 622 is associated with SIMD lane 1 and data element 612; and a set of XOR gates 620 is associated with SIMD lane 0. A set of OR gates 630 comprises one gate for each of bits 11 to 14 of the 16-bit data element including an OR gate 632 corresponding to bit 14. The set of OR gates 630 provides an indication of the position of the most significant bit overall for the magnitudes of the 16-bit result values stored in the thirty-two data-element SIMD result vector.

Each 16-bit data element 610, 612, 614 is a signed data value in which bit 15 is the sign-bit. The data values are stored in "2's complement" notation in which negative numbers are represented by the 2's complement of the absolute value and a number is converted from positive to negative or vice versa by computing its 2's complement. To find the 2's complement of a binary number each bit is inverted and the value of 1 is added to the inverted value (bit overflow is ignored). The 2's complement of a negative number is the corresponding positive value. For example consider an 8-bit signed binary representation of the decimal value 5 which is 00000101. Since the most significant bit is a 0 this pattern represents a non-negative value. To convert this positive value to -5 in 2's complement notation each bit is inverted to give the value 11111010 and then a 1 is added to the inverted value to give 11111011. The most significant bit is a 1 so the value represented is negative (-5 in this case).

In the arrangement of Figure 6, bit 15 is the most significant bit and hence is also the sign-bit. The first stage of calculating the MSB mask involves checking the 16-bit value in each of the thirty-two SIMD lanes to determine whether or not it is negative or positive. For each SIMD lane in which the sign-bit indicates a negative value, the 16-bit data element is inverted. The XOR gates 620, 622, 624 perform the inversion. The data elements for which the most significant bit is a zero (corresponding to positive values) are not inverted.

As shown in Figure 6, the OR gates 630 are used to perform a logical OR operation (or a functional equivalent thereof). In particular a functional OR operation is performed on bit 14 of each data element for each of the thirty-two SIMD lanes. This is performed by the OR gate 632. Thus if any of the data elements has a non-zero bit in bit-position 14, the OR gate will have an output value of 1. However if all of the SIMD lanes have an empty bit 14 and the output of the OR gate will be zero, which indicates that the most significant bit is in one of the other 14 bit-positions [0,1,2..., 13].

The OR gate 632 represents a logical OR of all of the 32-bits corresponding to bit-position 14 of the thirty-two data elements corresponding to the thirty-two SIMD lanes. Although an equivalent functional OR gate could be provided for each of the 15 non-signed bits of the data element, in this particular embodiment, the OR gates 630 are provided for only the four most significant bit positions i.e. bits [11, 12, 13, 14].

Only a subset of the most significant bits need be considered to accurately determine the most significant bit due to the fact that the programmer is able to determine ahead of time how many carry bits a given round of calculations is likely to generate. For example, in the butterfly diagram of Figure 1, it is clear that up to two carry bits (from the complex multiply) can be generated from each round of calculations. Knowledge of this makes it possible for the programmer to determine in advance the maximum and minimum range within which the most significant bit may be found. In the Figure 6 example it is known that in the previous round of calculations, the MSB position was determined to be at bit-position 12. It follows that the MSB position for the subsequent round of calculations can be determined from bit-positions 11, 12, 13 and 14 alone. Use of the XOR gates 620, 622, 624 provides a good approximation to a full 2's complement calculation yet is faster and cheaper (e.g. in terms of logic gates) to implement. The approximation becomes even closer as more of the least significant bits are discarded.

In this particular arrangement the most significant bit determination is performed on the SIMD result vector after the scaling shift has been performed (scaling at stage 350 of the flow chart of Figure 3 or stage 450 of the flow chart of Figure 4). However, in alternative arrangements, the most-significant-bit determination is performed prior to the scaling shift.

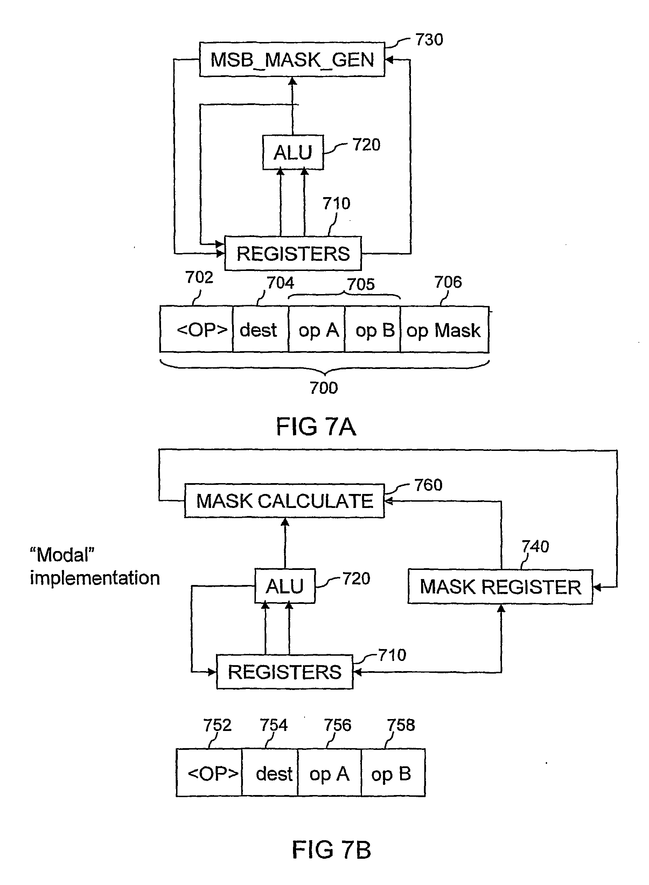

Figures 7A and 7B schematically illustrate two different sets of circuitry and associated data flow for execution of a combined magnitude-detecting arithmetic instruction according to the present technique. In particular, Figure 7A schematically illustrates an instruction in which the maximum value mask is specified as an argument of the instruction. By way of contrast, Figure 7B schematically illustrates a so-called "modal implementation" of the instruction according to the present technique in which a predetermined mask register is used when the instruction is executed (in this case the instruction does not have an input argument specifying the mask).

The arrangement of Figure 7A comprises a register bank 710, an ALU 720 and an MSB mask generator 730. An instruction 700 corresponding to the circuitry of Figure 7 has a total of five fields comprising: an arithmetic operation field 702, a destination register field 704, two operand fields (op A and op B) 705 and an "op Mask" field that specifies a register for storing the most significant bit mask 706. The ALU 720 retrieves the operands op A and op B from the registers 710 during execution of the instruction. Once the arithmetic operation(s) have been performed by the ALU in response to control signals from the controller 510 (see Figure 5), the MSB mask generator 730 analyses the results vectors to determine the most significant bit position for the plurality of data elements of the packed SIMD results vector and updates the "op mask" value stored in the registers 710.

In the arrangement of Figure 7B, the instruction comprises four fields (rather than the five fields of the instruction of Figure 7A). The four fields comprise: an arithmetic operator field 752, a field specifying a destination register 754 and two operand fields (op A and op B) 756, 758. This arrangement differs from that of Figure 7A in that the instruction does not have a field specifying a register to be used to store the most significant bit mask. Instead, a predetermined mask register 740 is used upon execution of the instruction to maintain a current value providing an indication of the most significant bit position. The value can be read from the mask register at the end of each round of calculations, e.g. at the end of each inner loop of the FFT calculation in order to determine the scaling value for the next iteration.

The mask register 740 is a "modal" register that accumulates the most significant bit position information. The mask register is initialised e.g. to zero before a block of calculations begins. For the first iteration of a loop of calculations, the mask calculation circuitry 760 calculates the mask (i.e. the MSB position) for each executed instruction and stores the current value in the mask register 740. For subsequent iterations, the MSB position determined for a given iteration is combined with the current MSB position stored in the mask register 740 such that the register maintains the highest MSB position. The mask register 740 is then read at the end of a block of calculations to determine the highest-valued MSB that has been reached.

The following is an excerpt of program code than makes use of the combined magnitude-detecting arithmetic instruction according to the present technique. The program code is for a block floating-point radix 2 FFT algorithm.

```
jj=LTOuter;
FFT_LT_OUTER:
for(j=LTOuter;j>0;j--){
vRDTmp = vuzp_m_s16(t_r0,t_r0, 0);
vIDTmp = vuzp_m_s16(t_i0,t_i0, 0);
t_r0 = vRDTmp.a[0];
t_i0 = vIDTmp.a[0];

jj--;
ii=0;
sMaskR0=(s16)0;
sMaskR1=(s16)0;
sMaskI0=(s16)0;
sMaskI1=(s16)0;
FFT_LT_INNER:
for(i=0;i<Inner;i++){
 AddLY0 = ii+ii+Ping;
 AddLY1 = ii+ii+Ping+1;
 AddSY0 = ii+Pong;
 AddSY1 = ii+Pong+Points_2;

 ii++;

 r0 = vqrshl_n_s16(vRMem[AddLY0],sShift); // Load Data from Vector memory
 r1 = vqrshl_n_s16(vRMem[AddLY1],sShift);
 i0 = vqrshl_n_s16(vIMem[AddLY0],sShift);
  i1 = vqrshl_n_s16(vIMem[AddLY1],sShift);

 tmpr = vpqsub_m_bf_s16(r0,r1,jj,&sMaskR0); //Butterflies
 rr0 = vpqadd_m_bf _s16(r0,r1,jj,&sMaskR1);
 tmpi = vpqsub_m_bf_s16(i0,i1,jj,&sMaskI0);
 ii0 = vpqadd_m_bf_s16(i0,i1,jj,&sMaskI1);

 tmpqr0 = vqdmull_s16(tmpr,t_r0); //Multiply by twiddle values
 rr1 = vqrdmlsh_s16(tmpqr0,tmpi,t_i0);
 tmpqi0 = vqdmull_s16(tmpi,t_r0);
 ii1 = vqrdmlah_s16(tmpqi0,tmpr,t_i0);
 vRMem[AddSY0] = rr0;     //save data where it came from
 vIMem[AddSY0] = ii0;
 vRMem[AddSY1] = rr1;
 vIMem[AddSY1] = ii1;
 }
 Ping ^= Pong;     //swap ping and pong
```

```
Pong ^= Ping;
Ping ^= Pong;

sMaskR0 |= sMaskR1;      //combine all the mask values
sMaskI0 |= sMaskI1;
sMask = sMaskR0 | sMaskR1;

sInScale = dz_s16(sMask);      // find MSBit
sShift = sInScale-LEADING_ZEROS ; // new shift value
sExp = sExp + sShift;      // update exponent running total
}
```

The butterfly diagrams of Figure 1 are calculated within the FFT inner loop. The notation in the butterfly diagram of Figure 1 can be correlated with the variables in the above program code. In particular, the inputs to the butterfly computation are (r0, i0), (r1, i1) and the outputs are (rr0, ii0) (rr1, ii1). For example, the following combined magnitude-detecting arithmetic instructions are used to calculate the output A = (rr0, ii0) from the inputs a = (r0, i0) and b = (r1, i1).

    rr0 = vpqadd_m_bf_s16(r0,r1,jj,&sMaskR1);
    ii0 = vpqadd_m_bf_s16(10,i1,jj,&sMaskI1);

The *"vpqadd"* instructions involve an addition operation and a magnitude-detecting operation whereas the *"vpqsub"* instructions involve a subtraction operation and a magnitude-detecting operation. The instruction input argument *"sMaskR1"* is the MSB mask for the real component of the result vector whereas *"sMaskI1"* is the MSB mask for the imaginary component of the result vector. The masks are combined at the end of the above section of program code (outside the FFT inner loop but within the FFT outer loop). The CLZ instruction is used to determine the position of the most significant bit at the end of each FFT inner loop.

Whilst the above described techniques may be performed by hardware executing a sequence of native instructions which include the above-mentioned instructions, it will be appreciated that in alternative embodiments, such instructions may be executed in a virtual machine environment, where the instructions are native to the virtual machine, but the virtual machine is implemented by software executing on hardware having a different native instruction set. The virtual machine environment may provide a full virtual machine environment emulating execution of a full instruction set or may be partial, e.g. only some instructions, including the instructions of the present technique, are trapped by the hardware and emulated by the partial virtual machine.

More specifically, the above-described combined magnitude-detecting arithmetic instructions may be executed as native instructions to the full or partial virtual machine, with the virtual machine together with its underlying hardware platform operating in combination to provide the processing circuitry described above.

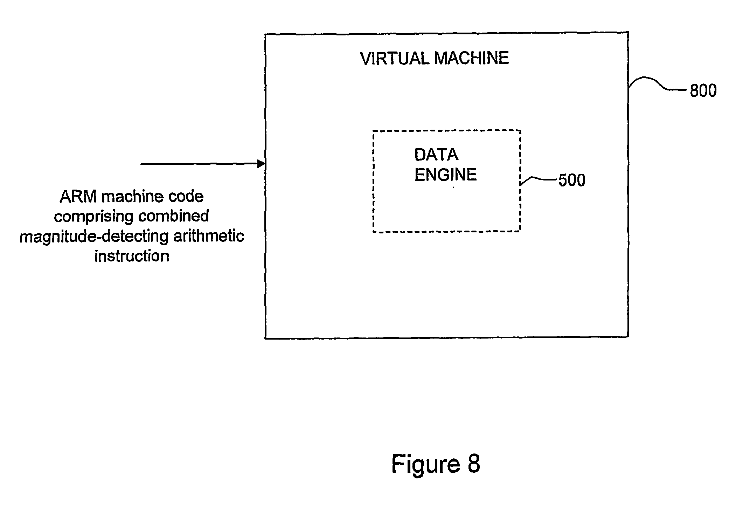

Figure 8 schematically illustrates a virtual machine implementation of the data engine 500 of Figure 5. The arrangement comprises a virtual machine 800 arranged to emulate operation of the data engine 500. The virtual machine 800 (e.g. emulating an ARM processor or data engine) is arranged to receive machine code (e.g. ARM machine code) including combined magnitude-detecting arithmetic instructions in accordance with the present technique for which it emulates execution. If a general purpose processor on which the virtual machine 800 is to be run is of sufficiently high performance, then realistic overall processing throughput may be achieved and the advantages of being able to execute an existing code base including combined magnitude-detecting arithmetic instructions in accordance with the present technique may justify the use of a general purpose processor in this way.

Although a particular embodiment has been described herein, it will be appreciated that the invention is not limited thereto and that many modifications and additions thereto may be made within the scope of this invention. For example, various combinations of the features of the following dependent claims could be made with the features of the independent claims without departing from the scope of the present invention.

## Claims

1.  Apparatus (500) for processing data, said apparatus comprising:

    processing circuitry (520) for performing data processing operations;
    one or more registers (530, 540) for storing data;
    control circuitry (510) for controlling said processing circuitry (520) to perform said data processing operations;
    wherein said control circuitry (510) is configured such that it is responsive to a combined magnitude-detecting arithmetic instruction to control said processing circuitry (520) to perform an arithmetic operation on at least one data element stored in said one or more registers and specified by said combined magnitude-detecting arithmetic instruction and to perform a magnitude-detecting operation, wherein said magnitude-detecting operation calculates a magnitude-indicating result providing an indication of a position of a most-significant bit of a magnitude of a result of said arithmetic operation irrespective of whether said most-significant bit position exceeds a data element width of said at least one data element; **characterised in that**:

said processing circuitry (520) is SIMD processing circuitry arranged to independently perform said arithmetic operation for each of a plurality of SIMD lanes, said combined magnitude-detecting arithmetic instruction identifying at least one SIMD input vector comprising a plurality of data elements on which said arithmetic operation is independently performed to generate a SIMD result vector comprising a respective plurality of result data-elements; and

said magnitude-indicating result provides an indication of a most-significant bit of a greatest of a plurality of magnitudes corresponding to a respective plurality of data elements of said SIMD result vector.

2.  Apparatus as claimed in claim 1, wherein said magnitude-indicating operation produces a SIMD result vector having a plurality of result values corresponding respectively to said plurality of SIMD lanes, the magnitude-indicating result being determined based on said SIMD result vector.

3.  Apparatus according to any one of the preceding claims, wherein said control circuitry (510) is responsive to said combined magnitude-detecting arithmetic instruction to perform a scaling calculation to scale said at least one data element prior to performing said arithmetic operation in dependence upon a scaling parameter specified by said combined magnitude-detecting arithmetic instruction.

4.  Apparatus according to claim 3, wherein said control circuitry (510) is responsive to said combined magnitude-detecting arithmetic instruction to calculate said magnitude-indicating result from output of said scaling calculation.

5.  Apparatus according to any one of the preceding claims, wherein said control circuitry (510) is responsive to said combined magnitude-detecting arithmetic instruction to control said processing circuitry (520) to calculate said magnitude-indicating result in dependence on an operand specified by said combined magnitude-detecting arithmetic instruction.

6.  Apparatus according to any one of the preceding claims, wherein said processing circuitry (520) calculates said magnitude-indicating result such that said most-significant bit is derivable from said magnitude-indicating result by executing one of a Count Leading Zeros instruction and a Count Leading Sign instruction.

7.  Apparatus according to any one of the preceding claims, wherein said combined magnitude-detecting arithmetic instruction is provided within a loop of instructions such that said magnitude-indicating result is calculated for each iteration of said loop.

8.  Apparatus according to claim 7, wherein said control circuitry (510) is responsive to said combined magnitude-detecting arithmetic instruction to accumulate said magnitude-indicating result for each iteration of said loop in a magnitude-indicating register.

9.  Apparatus (500) for processing data, said apparatus comprising:

processing circuitry (520) for performing data processing operations;
one or more registers (530, 540) for storing data;
control circuitry (510) for controlling said processing circuitry to perform said data processing operations;
wherein said control circuitry (510) is configured such that it is responsive to a combined magnitude-detecting arithmetic instruction to control said processing circuitry (520) to perform an arithmetic operation on at least one data element stored in said one or more registers and specified by said combined magnitude-detecting arithmetic instruction and to perform a magnitude-detecting operation, wherein said magnitude-detecting operation calculates a magnitude-indicating result providing an indication of a position of a most-significant bit of a magnitude of a result of said arithmetic operation irrespective of whether said most-significant bit position exceeds a data element width of said at least one data element; **characterised in that**:

said processing circuitry (520) is SIMD processing circuitry arranged to independently perform said arithmetic operation for each of a plurality of SIMD lanes, said combined magnitude-detecting arithmetic instruction identifying at least one SIMD input vector comprising a plurality of data elements on which said arithmetic operation is independently performed to generate a SIMD result vector comprising a respective plurality of result data-elements; and

said control circuitry (510) is responsive to said combined magnitude-detecting arithmetic instruction to control said processing circuitry to perform at least one logical operation on at least two of said plurality of data elements of said result of said SIMD arithmetic operation to calculate said magnitude-indicating result, wherein said at least one logical operation is functionally equivalent to a logical OR operation.

10. Apparatus according to claim 9, wherein said control circuitry (510) is responsive to said combined magnitude-detecting arithmetic instruction to control said processing circuitry to perform said at least one logical operation on a subset of bits of said at least two data elements.

11. Apparatus according to claim 9, wherein said control circuitry (510) is responsive to said combined magnitude-detecting arithmetic instruction to perform a scaling calculation to scale said at least one data element prior to performing said arithmetic operation in dependence upon a scaling parameter specified by said combined magnitude-detecting arithmetic instruction;

said control circuitry (510) is responsive to said combined magnitude-detecting arithmetic instruction to calculate said magnitude-indicating result from output of said scaling calculation; and

said control circuitry (510) is responsive to said combined magnitude-detecting arithmetic instruction to control said processing circuitry (520) to detect one or more of said plurality of data elements of said result of said SIMD arithmetic operation having a negative value and to invert said negative value prior to performing said at least one logical operation.

12. Apparatus according to claim 9, wherein said control circuitry (510) is responsive to said combined magnitude-detecting arithmetic instruction to perform a scaling calculation to scale said at least one data element prior to performing said arithmetic operation in dependence upon a scaling parameter specified by said combined magnitude-detecting arithmetic instruction;

said control circuitry (510) is responsive to said combined magnitude-detecting arithmetic instruction to calculate said magnitude-indicating result from output of said scaling calculation; and

said control circuitry (510) is responsive to said combined magnitude-detecting arithmetic instruction to control said processing circuitry (520) to detect one or more of said plurality of data elements of said result of said SIMD arithmetic operation having a negative value and to negate said negative values prior to performing said at least one logical operation.

13. Method for processing data with a data processing apparatus having processing circuitry for performing data processing operations, one or more registers for storing data and control circuitry for controlling said processing circuitry to perform said data processing operations, said method comprising in response to a combined magnitude-detecting arithmetic instruction:

controlling (360;450) said processing circuitry to perform an arithmetic operation on at least one data element stored in said one or more registers and specified by said combined magnitude-detecting arithmetic instruction; and

performing (360;450) a magnitude-detecting operation, wherein said magnitude-detecting operation calculates a magnitude-indicating result providing an indication of a position of a most-significant bit of a magnitude of a result of said arithmetic operation irrespective of whether said most-significant bit position exceeds a data element width of said at least one data element; **characterised in that**:

said arithmetic operation is performed for each of a plurality SIMD lanes, said combined magnitude-detecting arithmetic instruction identifying at least one SIMD input vector comprising a plurality of data elements on which said arithmetic operation is independently performed to generate a SIMD result vector comprising a respective plurality of result data elements; and

said magnitude indicating result provides an indication of a most significant bit of a greatest of a plurality of magnitudes corresponding to a respective plurality of data elements of said SIMD result vector.

14. A computer program product comprising a computer program operable when executed on a data processing apparatus to cause said data processing apparatus to operate in accordance with the method of claim 13, said computer program comprising at least one combined magnitude-detecting arithmetic instruction.

**15.** A virtual machine (800) providing an emulation of an apparatus (500) for processing data, said apparatus comprising:

processing circuitry (520) for performing data processing operations;
one or more registers (530,540) for storing data;
control circuitry (510) for controlling said processing circuitry (520) to perform said data processing operations;
wherein said control circuitry (510) is configured such that it is responsive to a combined magnitude-detecting arithmetic instruction to control said processing circuitry (520) to perform an arithmetic operation on at least one data element stored in said one or more registers and specified by said combined magnitude-detecting arithmetic instruction and to perform a magnitude-detecting operation, wherein said magnitude-detecting operation calculates a magnitude-indicating result providing an indication of a position of a most-significant bit of a magnitude of a result of said arithmetic operation irrespective of whether said most-significant bit position exceeds a data element width of said at least one data element; **characterised in that**:

said processing circuitry (520) is SIMD processing circuitry arranged to independently perform said arithmetic operation for each of a plurality of SIMD lanes, said combined magnitude-detecting arithmetic instruction identifying at least one SIMD input vector comprising a plurality of data elements on which said arithmetic operation is independently performed to generate a SIMD result vector comprising a respective plurality of result data-elements; and
said magnitude-indicating result provides an indication of a most-significant bit of a greatest of a plurality of magnitudes corresponding to a respective plurality of data elements of said SIMD result vector.

**Patentansprüche**

**1.** Datenverarbeitungsvorrichtung (500), wobei die Vorrichtung aufweiset:

einen Verarbeitungsschattkreis (520) zum Ausrühren von Datenverarbeitungsoperationen,
ein oder mehrere Register (530, 540) zum Speichern von Daten,
einen Steuerschaltkreis (510) zum Steuern des Verarbeitungsschaltkreises (520), sodass die Datenverarbeitungsoperationen aufgeführt werden,
wobei der Steuerschaltkreis (510) so eingerichtet ist, dass er auf einen kombinierten arithmetischen Betragserfassungsbetehl so reagiert, dass er den Verarbeitungsschaltkreis (520) so steuert, dass er eine durch den kombinierten arithmetischen Betragserfassungsbefehl spezifizierte arithmetische Operation auf mindestens ein in dem einen oder den mehrren Registern gespeichertes Datenelement anwendet und dass er eine Betragserfassungsoperation ausführt, wobei die Betragserfassungsoperation ein den Betrag bezeichnendes Ergebnis berechnet, das eine Bezeichnung einer Position eines signifikantesten Bit eines Betrags eines Ergebnisses der arithmetischen Operation bereitstellt, unabhängig davon ob d Position des signifikantesten Bit eine Datenelementbreite des mindestens einen Datenelements überschreitet, **dadurch gekennzeichnet, dass**
der Verarbeitungsschaltkreis (520) ein SIMD-Verarbeitungsschaltkreis ist, der so eingerichtet ist, dass er die arithmetische Operation für jeden aus einer Mehrzahl von SIMD-Pfaden unabhängig ausführt, wobei der kombinierte arithmetische Betragserfassrngsbefehl mindestens einen SIMD-Eingangsvektor mit einer Mehrzahl von identifiziert, auf welchen die arithmetische Operation unabhängig ausgeführt wird, um einen resultierenden SIMD-Vektor mit einer entsprechenden Mehrzahl von Ergebnisdatenetementen zu erzeugen, und
das den Betrag bezeichnende Ergebnis eine Bezeichnung eines signifikantesten Bit eines größten aus einer Mehrzahl von Beträgen bereitstellt, der einer entsprechenden Mehrzahl von Datendementen des SIMD-Ergebnisvektors entspricht.

**2.** Vorrichtung Anspruch 1, wobei die den Betrag bezeichnende Operation einen SIMD-Ergebnisvektor mit einer Mehrzahl von Ergebniswerten erzeugt, entsprechend der Mehrzahl der entsprechenden SIMD-Pfade, wobei das den Betrag bezeichnende Ergebnis bestimmt wird basierend auf dem SIMD-Ergebnisvektor,

**3.** Vorrichtung nach einem der vorhergehenden Ansprüche, wobei der Steuerschaltkreis (510) auf den kombinierten arithmetischen Betragserfassungsbefehl so reagiert, dass eine Skalierungsberechnung ausgeführt wird, sodass das mindestens eine Datenelement vor dem Anwender der arithmetischen Operation in Abhängigkelt von einem von dem kombinierten arithmetischen Betragserfassungsbefehl spezifizierten Skalierungsparameter skatiertwird.

**4.** Vorrichtung nach Anspruch 3, wobei der Steuerschaltkreis (510) auf den kombinierten arithmetischen Betragserfassungsbefehl so reagiert, dass das den Betrag bezeichnende Ergebnis aus der Ausgabe der Skalierungsberechnung berechnet wird.

**5.** Vorrichtung nach einem der vorhergehenden Ansprüche, wobei der Steuerschaltkreis (510) auf den kombinierten arithmetischen Betragserfassungsbefehl so reagiert, dass der Verarbeitungsschaltkreis (520) so gesteuert wird, dass er das den Betrag bezeichnende Ergebnis in Abhängigkeit von einem durch den kombinierten arithmetischen Betragserfassungsbefehl bestimmten Operanden berechnet.

**6.** Vorrichtung nach einem der vorhergehenden Ansprüche, wobei der Verarbeitungsschaltkreis (520) das den Betrag bezeichnende Ergebnis so berechnet, dass das signifikanteste Bit aus dem den Betrag bezeichnenden Ergebnis ableitbar ist durch Ausrühren eines Count Leading Zeros-Befehl oder eines Count Leading Sign-Befehls,

**7.** Vorrichtung nach einem der vorhergehenden Ansprüche, wobei der kombinierte arithmetische Betragserfassungsbefehl innerhalb einer Schleife von Befehlen vorgesehen ist, sodass das den Betrag bezeichnende Ergebnis für jede Iteration der Schleife berechnet wird.

**8.** Vorrichtung nach Anspruch 7, wobei der Steuerschaltkreis (510) auf den kombinierten arithmetischen Betragserfassungsbefehl so reagiert, dass das den Betrag bezeichnende Ergebnis für jede Iteration der Schleife in einem den Betrag bezeichnenden Register akkumutiert wird.

**9.** Datenverarbeitungsvorrichtung (500), wobei die Vorrichtung aufweist:

einen Verarbeitungsschaitkreis (520) zum Ausführen von Datenverarbeitungsoperationen,
ein oder mehrere Register (530, 540) zum Speichern von Daten,
einen Steuerschaltkreis (510) zum Steuern des Verarbeitungsschaltkreises, sodass die Datenverarbeitungsoperationen ausgeführt werden,
wobei der Steuerschaltkreis (510) so eingerichtet ist, dass er auf einen kombinierten arithmetischen Betragserfassungsbefehl so reagiert, dass der Verarbeitungsschaltkreis (520) so gesteuert wird, dass er eine durch den kombinierten arithmetischen Betragserfassungsbefehl spezifizierte arithmetische Operation auf mindestens ein in dem einen oder den mehreren Registern gespeichertes Datenelement anwendet und eine Betragserfassungsoperation ausführt, wobei die Betragserfassungsoperation ein den Betrag bezeichnendes Ergebnis berechnet, das eine Anzeige einer Position eines signifikantesten Bit eines Betrags aus einem Ergebnis der arithmetischen Operation bereitstellt, unabhängig davon, ob die Position des signifikantesten Bit eine Datenelementbreite des mindestens einen Datenelementes übersteigt, **dadurch gekennzeichnet, dass**
der Verarbeitungsschaltkreis (520) ein SIMD-Verarbeitungsschaltkreis ist, der so eingerichtet ist, dass er die arithmetische Operation unabhängig auf jeden aus einer Mehrzahl von SIMD-Pfaden anwendet, wobei der kombinierte arithmetische Betragserfassungsbefehl mindestens einen SIMD-Eingabevektor mit einer Mehrzahl von Datenelementen identifiziert, auf welche die arithmetische Operation unabhängig angewendet wird, sodass ein SIMD-Ergebnisvektor mit einer entsprechenden Mehrzahl von Ergebnisdatenelementen erzeugt wird, und der Steuerschaltkreis (510) auf den kombinierten arithmetischen Betragserfassungsbefehl so reagiert, dass der Verarbeitungsschaitkreis so gesteuert wird, dass mindestens eine logische Operation auf mindestens zwei aus der Mehrzahl von Datenetementen des Ergebnisses der arithmetischen SIMD-Operation angewandt wird, sodass das den Betrag bezeichnende Ergebnis berechnet wird, wobei die mindestens eine logische Operation einer logischen OR-Operation funktionell äquivalent ist.

**10.** Vorrichtung nach Anspruch 9, wobei der Steuerschaltkreis (510) auf den kombinierten arithmetischen Betragserfassungsbefehl so reagiert, dass der Verarbeitungsschaltkreis so gesteuert wird, dass die mindestens eine logische Operation auf einen Untersatz von Bits der mindestens zwei Datenelemente angewandt wird.

**11.** Vorrichtung nach Anspruch 9, wobei der Steuerschaltkreis (510) auf den kombinierten arithmetischen Betragserfassungsbefehl so reagiert, dass eine Skalierungsberechnung ausgerührt wird, sodass das mindestens eine Datenelement skaliert wird bevor die arithmetische Operation ausgeführt wird in Abhängigkeit von einem Skalierungsparameter, der durch den kombinierten arithmetischen Betragserfassungsbefehl spezifiziert wird,
der Steuerschaltkreis (510) auf den kombinierten arithmetischen Betragserfassungsbefehl so reagiert, dass das den Betrag bezeichnende Ergebnis aus der Ausgabe der Skalierungsberechnung berechnet wird, und
der Steuerschaltkreis (510) so auf den kombinierten arithmetischen Betragserfassungsbefehl reagiert, dass der Verarbeitungsschaltkreis (520) gesteuert wird, sodass ein oder mehrere der Datenelemente des Ergebnisses der arithmetischen SIMD-Operation mit einem negativen Wert erfasst werden und die negativen Werte vor dem Anwender der mindestens einen logischen Operation invertiert werden.

12. Vorrichtung nach Anspruch 9, wobei der Steuerschaltkreis (510) auf den kombinierten arithmetischen Betragserfassungsbefehl so reagiert, dass eine Skalierungsberechnung ausgeführt wird, so dass das mindestens eine Datenelement vor dem Ausführen der arithmetischen Operation in Abhängigkeit von einem durch den kombinierten arithmetischen Betragserfassungsbefehl spezifizierten Skalierungsparameter skaliert wird,

der Steuerschaltkreis (510) auf den kombinierten arithmetischen Betragserfassungsbefehl so reagiert, dass das den Betrag bezeichnende Ergebnis aus einer Ausgabe der Skalierungsberechnung berechnet wird und

der Steuerschaltkreis (510) auf den kombinierten arithmetischen Betragserfassungsbefehl so reagiert, dass der Verarbeitungsschaltkreis (520) so gesteuert wird, dass er ein oder mehrere der Mehrzahl von Datenelementen des Ergebnisses der arithmetischen SIMD-Operation mit einem negativen Wert erfasst und die negativen Werte vor dem Ausführen der mindestens einen logischen Operation negiert.

13. Verfahren zum Verarbeiten von Daten mit einer Datenverarbeitungsvorrichtung mit einem Verarbeitungsschaltkreis zum Ausführen von Datenverarbeitungsoperationen, einem oder mehreren Registern zum Speichern von Daten und einem Steuerschaltkreis zum Steuern des Verarbeitungsschaltkreises, sodass die Datenverarbeitungsoperationen ausgeführt werden, wobei das Vorfahren als Reaktion auf einen kombinierten arithmetischen Betragserfassungsbefehl aufweist:

Steuern (360, 450) des Verabeitungsschaltkreises, sodass eine arithmetische Operation, die von dem kombinierten arithmetischen Betragserfassungsbefehl spezifiziert wird, auf mindestens ein in den einen oder den mehreren Registern gespeichertes Datenelement angewandt wird und

Ausführen (360, 450) einer Betragserfassungsoperation, wobei die Betragserfassungsoperation ein den Betrag bezeichnendes Ergebnis, das eine Anzeige einer Position eines signifikantesten Bit eines Betrags eines Ergebnisses der arithmetischen Operation bereitstellt, unabhängig davon, ob die Position des signifikantesten Bit eine Datenelementbreite des mindestens eines Datenelements übersteigt, bereitstellt, **dadurch gekennzeichnet, dass**

die arithmetische Operation für jeden aus einer Mehrzahl von SIMD-Pfaden ausgeführt wird, wobei der kombinierte arithmetische Betragserfassungsbefehl mindestens einen SIMD-Eingabevektor mit einer Mehrzahl von Datenelementen, auf die die arithmetische Operation unabhängig angewandt werden, um einen SIMD-Ergebnisvektor mit einer entsprechenden Mehrzahl von Ergebnisdatenelementen zu Erzeugen, identifiziert und

das betragsanzeigende Ergebnis eine Anzeige eines signifikantesten Bit eines größten aus einer Mehrzahl von Beträgen bereitstellt entsprechend einer entsprechenden Mehrzahl von Datenelementen des SIMD-Ergebnisvektors.

14. Computerprogrammprodukt mit einem Computerprogramm, das wenn es auf einer Datenverarbeitungsvorrichtung ausgeführt wird, so betreibbar ist, dass es die Datenverarbeitungsvorrichtung veranlasst, gemäß dem Verfahren nach Anspruch 13 zu arbeiten, wobei das Computerprogrammprodukt mindestens einen kombinierten arithmetischen Betragserfassungsbefehl aufweist.

15. Virtuelle Maschine (800), die eine Emulation einer Datenverarbeitungsvorrichtung (500) bereitstellt, wobei die Vorrichtung aufweist:

einen Verarbeitungsschaltkreis (520) zum Ausführen von Datenverarbeitungsoperationen,

ein oder mehrere Register (530, 540) zum Speichern von Daten,

einen Steuerschaltkreis (510) zum Steuern des Verarbeitungsschaltkreises (520), sodass die Datenverarbeitungsoperationen ausgeführt werden,

wobei der Steuerschaltkreis (510) so eingerichtet ist, dass er auf einen kombinierten arithmetischen Betragserfassungsbefehl so reagiert, dass er den Verarbeitungsschaltkreis so steuert, dass eine arithmetische Operation, die von dem kombinierten arithmetischen Betragserfassungsbefehl spezifiziert wird, auf mindestens ein in dem einen oder den mehreren Registern gespeichertes Datenelement angewandt wird, wobei die Betragserfassungsoperation ein den Betrag anzeigendes Ergebnis, das eine Anzeigte einer Position eines signifikantesten Bit eines Betrags eines Ergebnisses der arithmetischen Operation anzeigt, unabhängig davon ob die signiftkanteste Bitposition eine Datenelementbreite des mindestens einen Datenelements übersteigt, berechnet, dadurch gekenntzeichnet, dass

der Verarbeitungsschaftkreis (520) ein SIMD-Verarbeitungsschaltkreis ist, der so eingerichtet ist, dass er die arithmetische Operation unabhängig für eine Mehrzahl von SIMD-Pfaden anwendet, wobei der kombinierte arithmetische Betragserfassurigsbefehl mindestens einen SIMD-Eingabevektor mit einer Mehrzahl von Datenelementen, auf die der arithmetische Befehl unabhängig angewandt wird, um einen SIMD-Ergebnisvektor mit einer entsprechenden Mehrzahl von Ergebnisdatenelementen zu erzeugen, und

das den Betrag anzeigende Ergebnis eine Anzeige eines signifikantesten Bit eines größten aus einer Mehrzahl von Beträgen entsprechend einer entsprechenden Mehrzahl von Datenelementen des SIMD-Ergebnisvektors bereitstellt.

## Revendications

1. Appareil (5 00) pour traiter des données, ledit comprenant :

    un ensemble de circuits de traitement (520) pour effectuer des opérations de traitement de données ;
    un ou plusieurs registres (530, 540) pour stocker des données ;
    un ensemble de circuits de commande (510) pour commander ledit ensemble de circuits de traitement (520) pour effectuer lesdites opérations de traitement de données ;
    dans lequel ledit ensemble de circuits de commande (510) est configuré de façon à être sensible à une instruction arithmétique de détection de grandeur combinée pour commander ledit ensemble de circuits de traitement (520) pour effectuer une opération arithmétique sur au moins un élément de données stocké dans lesdits un ou plusieurs registres et spécifié par ladite instruction arithmétique de détection de grandeur combinée et pour effectuer une opération de détection de grandeur, où ladite opération de détection de grandeur calcule un résultat d'indication de grandeur fournissant une indication d'une position d'un bit de poids fort d'une grandeur d'un résultat de ladite opération arithmétique indépendamment de si ladite position de bit de poids fort dépasse une largeur d'élément de données dudit au moins un élément de données ; **caractérisé en ce que** :

    ledit ensemble de circuits de traitement (520) est un ensemble de circuits de traitement SIMD agencé pour effectuer indépendamment ladite opération arithmétique pour chacune d'une pluralité de voies SIMD, ladite instruction arithmétique de détection de grandeur combinée identifiant au moins un vecteur d'entrée SIMD comprenant une pluralité d'éléments de données sur lesquels ladite opération arithmétique est effectuée indépendamment pour générer un vecteur de résultat SIMD comprenant une pluralité respective d'éléments de données de résultat; et
    ledit résultat d'indication de grandeur fournit une indication d'un bit de poids fort d'une plus grande d'une pluralité de grandeurs correspondant à une pluralité respective d'éléments de données dudit vecteur de résultat SIMD.

2. Appareil selon la revendication 1, dans lequel ladite opération d'indication de grandeur produit un vecteur de résultat SIMD ayant une pluralité de valeurs de résultat correspondant respectivement à ladite pluralité de voies SIMD, le résultat d'indication de grandeur étant déterminé sur la base dudit vecteur de résultat SIMD.

3. Appareil selon l'une quelconque des revendications précédentes, dans lequel ledit ensemble de circuits de commande (510) est sensible à ladite instruction arithmétique de détection de grandeur combinée pour effectuer un calcul de mise à l'échelle pour mettre à l'échelle ledit au moins un élément de données avant d'effectuer ladite opération arithmétique en fonction d'un paramètre de mise à l'échelle spécifié par ladite instruction arithmétique de détection de grandeur combinée.

4. Appareil selon la revendication 3, dans lequel ledit ensemble de circuits de commande (510) est sensible à ladite instruction arithmétique de détection de grandeur combinée pour calculer ledit résultat d'indication de grandeur à partir de la sortie dudit calcul de mise à l'échelle.

5. Appareil selon l'une quelconque des revendications précédentes, dans lequel ledit ensemble de circuits de commande (510) est sensible à ladite instruction arithmétique de détection de grandeur combinée pour commander ledit ensemble de circuits de traitement (520) pour calculer ledit résultat d'indication de grandeur en fonction d'un opérande spécifié par ladite instruction arithmétique de détection de grandeur combinée.

6. Appareil selon l'une quelconque des revendications précédentes, dans lequel ledit ensemble de circuits de traitement (520) calcule ledit résultat d'indication de grandeur de sorte que ledit bit de poids fort puisse être dérivé dudit résultat d'indication de grandeur en exécutant une d'une instruction de comptage de zéros à gauche et d'une instruction de comptage de signe à gauche.

7. Appareil selon l'une quelconque des revendications précédentes, dans lequel ladite instruction arithmétique de détection de grandeur combinée est pourvue à l'intérieur d'une bouclé d'instructions de sorte que ledit résultat d'indication de grandeur soit calculé pour chaque itération de ladite boucle.

8. Appareil selon la revendication 7, dans lequel ledit ensemble de circuits de commande (510) est sensible à ladite instruction arithmétique de détection de grandeur combinée pour cumuler ledit résultat d'indication de grandeur pour chaque itération de ladite boucle dans un registre d'indication de grandeur.

9. Appareil (500) pour traiter des données, ledit appareil comprenant :

un ensemble de circuits de traitement (520) pour effectuer des opérations de traitement de données ;
un ou plusieurs registres (530, 540) pour stocker des données ;
un ensemble de circuits de commande (510) pour commander ledit ensemble de circuits de traitement pour effectuer lesdites opérations de traitement de données ;
dans lequel ledit ensemble de circuits de commande (510) est configuré de façon à être sensible à une instruction arithmétique de détection de grandeur combinée pour commander ledit ensemble de circuits de traitement (520) pour effectuer une opération arithmétique sur au moins un élément de données stocké dans lesdits un ou plusieurs registres et spécifié par ladite instruction arithmétique de détection de grandeur combinée et pour effectuer une opération de détection de grandeur, où ladite opération de détection de grandeur calcule un résultat d'indication de grandeur fournissant une indication d'une position d'un bit de poids fort d'une grandeur d'un résultat de ladite opération arithmétique indépendamment de si ladite position de bit de poids fort dépasse une largeur d'élément de données dudit au moins un élément de données ; **caractérisé en ce que** :

ledit ensemble de circuits de traitement (520) est un ensemble de circuits de traitement SIMD agencé pour effectuer indépendamment ladite opération arithmétique pour chacune d'une pluralité de voies SIMD, ladite instruction arithmétique de détection de grandeur combinée identifiant au moins un vecteur d'entrée SIMD comprenant une pluralité d'éléments de données sur lesquels ladite opération arithmétique est effectuée indépendamment pour générer un vecteur de résultat SIMD comprenant une pluralité respective d'éléments de données de résultat ; et
ledit ensemble de circuits de commande (510) est sensible à ladite instruction arithmétique de détection de grandeur combinée pour commander ledit ensemble de circuits de traitement pour effectuer au moins une opération logique sur au moins deux de ladite pluralité d'éléments de données dudit résultat de ladite opération arithmétique SIMD pour calculer ledit résultat d'indication de grandeur, où ladite au moins une opération logique est fonctionnellement équivalente à une opération OU logique.

10. Appareil selon la revendication 9, dans lequel ledit ensemble de circuits de commande (510) est sensible à ladite instruction arithmétique de détection de grandeur combinée pour commander ledit ensemble de circuits de traitement pour effectuer ladite au moins une opération logique sur un sous-ensemble de bits desdits au moins deux éléments de données.

11. Appareil selon la revendications 9, dans lequel ledit ensemble de circuits de commande (510) est sensible à ladite instruction arithmétique de détection de grandeur combinée pour effectuer un calcul de mise à l'échelle pour mettre à l'échelle ledit au moins un élément de données avant d'effectuer ladite opération arithmétique en fonction d'un paramètre de mise à l'échelle spécifié par ladite instruction arithmétique de détection de grandeur combinée ;
ledit ensemble de circuits de commande (510) est sensible à ladite instruction arithmétique de détection de grandeur combinée pour calculer ledit résultat d'indication de grandeur à partir de la sortie dudit calcul de mise à l'échelle ; et
ledit ensemble de circuits de commande (510) est sensible à ladite instruction arithmétique de détection de grandeur combinée pour commander ledit ensemble de circuits de traitement (520) pour détecter un ou plusieurs de ladite pluralité d'éléments de données dudit résultat de ladite opération arithmétique SIMD ayant une valeur négative et pour inverser ladite valeur négative avant d'effectuer ladite au moins une opération logique.

12. Appareil selon la revendication 9, dans lequel ledit ensemble de circuits de commande (510) est sensible à ladite instruction arithmétique de détection de grandeur combinée pour effectuer un calcul de mise à l'échelle pour mettre à l'échelle ledit au moins un élément de données avant d'effectuer ladite opération arithmétique en fonction d'un paramètre de mise à l'échelle spécifié par ladite instruction arithmétique de détection de grandeur combinée ;
ledit ensemble de circuits de commande (510) est sensible à ladite instruction arithmétique de détection de grandeur combinée pour calculer ledit résultant d'indication de grandeur à partir de la sortie dudit calcul de mise à l'échelle ; et
ledit ensemble de circuits de commande (510) est sensible à ladite instruction arithmétique de détection de grandeur combinée pour commander ledit ensemble de circuits de traitement (520) pour détecter un ou plusieurs de ladite pluralité d'éléments de données dudit résultat de ladite opération arithmétique SIMA ayant une valeur négative et pour inverser lesdites valeurs négatives avant d'effectuer ladite au moins une opération logique.

**13.** Procédé pour traiter des données avec un appareil de traitement de données ayant un ensemble de circuits de traitement pour effectuer des opérations de traitement de données, un ou plusieurs registres pour stocker des données et un ensemble de circuits de commande pour commander ledit ensemble de circuits de traitement pour effectuer lesdites opérations de traitement de données, ledit procédé comprenant en réponse à une instruction arithmétique de détection de grandeur combinée :

la commande (360 ; 450) dudit ensemble de circuits de traitement pour effectuer une opération arithmétique sur au moins un élément de données stocké dans lesdits un ou
plusieurs registres et spécifié par ladite instruction arithmétique de détection de grandeur combinée ; et
l'exécution (360 ; 450) d'une opération de détection de grandeur, où ladite opération de détection de grandeur calcule un résultat d'indication de grandeur fournissant une indication d'une position d'un bit de poids fort d'une grandeur d'un résultat de ladite opération arithmétique indépendamment de si ladite position de bit de poids fort dépasse une largeur d'élément de données dudit au moins un élément de données ; **caractérisé en ce que** :

ladite opération arithmétique est effectuée pour chacune d'une pluralité de voies SIMD, ladite instruction arithmétique de détection de grandeur combinée identifiant au moins une vecteur d'entrée SIMD comprenant une pluralité d'éléments de données sur lesquels ladite opération arithmétique est effectuée indépendamment pour générer un vecteur de résultat SIMD comprenant une pluralité respective d'éléments de données de résultat ; et
ledit résultat d'indication de grandeur fournit une indication d'un bit de poids fort d'une plus grande d'une pluralité de grandeurs correspondant à une pluralité respective d'éléments de données dudit vecteur de résultat SIMD.

**14.** Produit de programme informatique comprenant un programme informatique exploitable, lorsqu'il est exécuté sur un appareil de traitement de données, pour amener ledit appareil de traitement de données à fonctionner selon le procédé de la revendication 13, ledit programme informatique comprenant au moins une instruction arithmétique de détection de grandeur combinée.

**15.** Machine virtuelle (800) fournissant une émulation d'un appareil (500) pour traiter des données, ledit appareil comprenant :

un ensemble de circuits de traitement (520) pour effectuer des opérations de traitement de données ;
un ou plusieurs registres (530, 540) pour stocker des données ;
un ensemble de circuits de commande (510) pour commander ledit ensemble de circuits de traitement (520) pour effectuer lesdites opérations de traitement de données ;
dans lequel ledit ensemble de circuits de commande (510) est configuré de façon à être sensible à une instruction arithmétique de détection de grandeur combinée pour commander ledit ensemble de circuits de traitement (520) pour effectuer une opération arithmétique sur au moins un élément de données stocké dans lesdits un ou plusieurs registres et spécifié par ladite instruction arithmétique de détection de grandeur combinée et pour effectuer une opération de détection de grandeur, où ladite opération de détection de grandeur calcule un résultat d'indication de grandeur fournissant une indication d'une position d'un bit de poids fort d'une grandeur d'un résultat de ladite opération arithmétique indépendamment de si ladite position de bit de poids fort dépasse une largeur d'élément de données dudit au moins un élément de données ; **caractérisé en ce que** :

ledit ensemble de circuits de traitement (520) est un ensemble de circuits de traitement SIMD agencé pour effectuer indépendamment ladite opération arithmétique pour chacune d'une pluralité de voies SIMD, ladite instruction arithmétique de détection de grandeur combinée identifiant au moins un vecteur d'entrée SIMD comprenant une pluralité d'éléments de données sur lesquels ladite opération arithmétique est effectuée indépendamment pour générer un vecteur de résultat SIMD comprenant une pluralité respective d'éléments de données de résultant ;
et
ledit résultat d'indication de grandeur fournit une indication d'un bit de poids fort d'une plus grande d'une pluralité de grandeurs correspondant à une pluralité respective d'éléments de données dudit vecteur de résultat SIMD.

$$A = (rr0, ii0) = (a+b) = (r0+r1, \; i0+i1)$$

$$B = (rr1, ii1) = (a-b)*W_N^r = (r0-r1, \; i0-i1)*W_N^r$$

$$a = (r0, i0)$$

$$b = (r1, i1)$$

$$-1$$

**FIG 1**

search input data
for *dmax* —210

calculate scaling
shift value —220

for *j = 1 to N; j++ outer loop* —230

for i = 1 to /; i++ inner loop —240

scale FFT butterfly
input data —250

perform inner loop
FFT calculation —260

Search intermediate result
data for *dmax'* —270

NO    Inner loop
complete? —280

YES

Use *dmax'* to calculate
scaling shift value —290

NO    Outer loop
complete? —292

YES

renormalise —294    Save results —296

FIG 2    PRIOR ART

```
          ┌─────────────────┐
          │ search input data│
          │   for dmax       │──⌐  310
          └─────────────────┘
                  │
                  ▼
          ┌─────────────────┐
          │ calculate scaling│
          │  shift  value    │──⌐  320
          └─────────────────┘
                  │
                  ▼
     ┌──────────────────────────────┐
┌───▶│ for j = 1 to N; j++ outer loop │──⌐  330
│    └──────────────────────────────┘
│                 │
│                 ▼
│   ┌──────────────────────────────┐
│ ┌▶│ for i = 1 to I; i++ inner loop │──⌐  340
│ │ └──────────────────────────────┘
│ │               │
│ │               ▼
│ │      ┌──────────────────┐
│ │      │ scale FFT butterfly│──⌐  350
│ │      │   input data     │
│ │      └──────────────────┘
│ │               │
│ │               ▼
│ │      ┌──────────────────┐
│ │      │ perform inner loop│
│ │      │ FFT calculation and│──⌐  360
│ │      │ search intermediate│
│ │      │ result data for DMAX'│
│ │      └──────────────────┘
│ │               │
│ │               ▼
│ │            ╱─────────╲
│ │   NO      ╱ Inner loop ╲──⌐  380
│ └──────────⟨ complete ?   ⟩
│            ╲             ╱
│             ╲─────────╱
│                  │ YES
│                  ▼
│       ┌──────────────────┐
│       │ Use DMAX' to calculate│──⌐  390
│       │  scaling shift value │
│       └──────────────────┘
│                  │
│                  ▼
│               ╱─────────╲    392
│      NO      ╱ Outer loop ╲
└─────────────⟨ complete?    ⟩
              ╲             ╱
               ╲─────────╱
                   │ YES              396
                   ▼     ⌐394
              ┌ ─ ─ ─ ─ ┐      ┌──────────────┐
              │renormalise│────▶│ Save results │
              └ ─ ─ ─ ─ ┘      └──────────────┘
```

FIG 3

FIG 4

FIG 5

FIG 6

MSB_MASK_GEN —730

ALU —720

710

REGISTERS

702  704  705  706

| <OP> | dest | op A | op B | op Mask |

700

## FIG 7A

MASK CALCULATE —760

"Modal"
implementation

ALU —720

MASK REGISTER

740

REGISTERS —710

752  754  756  758

| <OP> | dest | op A | op B |

## FIG 7B

EP 2 208 132 B1

VIRTUAL MACHINE

—800

DATA
ENGINE

—500

ARM machine code
comprising combined
magnitude-detecting arithmetic
instruction

Figure 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4872132 A
- US 20050071403 A1